# EUROPEAN PATENT APPLICATION

(11) **EP 4 563 336 A1**
(43) Date of publication of application: **04.06.2025**
(21) Application number: 23213603.6
(22) Date of filing: 01.12.2023
(51) Int. Cl.: B29C 70/54, B29D 99/00, B66C 1/02, B29C 31/08, B65G 47/91, F03D 1/06, B29L 31/08, B25J 15/06

(54) **TRANSPORT DEVICE**

(71) Applicant: Siemens Gamesa Renewable Energy A/S, 7330 Brande (DK)
(72) Inventor: Joergensen, Jens Grandjean, 9000 Aalborg (DK); Nielsen, Mogens, 9220 Aalborg (DK)
(74) Representative: SGRE-Association

(57) **Abstract**

Transport device for transporting preform elements (24) from a mold (22) to a receiving place, comprising a yoke (2) equipped with a number of gripper elements (5) for gripping the preform element (24), which yoke (2) is attached to a lifting device (6) by means of a first and a second rotation unit (7, 8) of the lifting means (6), which first and second rotation units (7, 8) are coupled to a rotation shaft defining a rotation axis of the yoke (2), wherein the first rotation unit (7) is coupled to a first end of the rotation shaft provided at a first end of the yoke (2) and the second rotation unit (8) is coupled to a second end of the rotation shaft at a second end of the yoke (2), wherein at least one drive motor (16) is provided for rotating the yoke (2) around the rotation axis relative to the first and second rotation unit (7, 8).

## Description

The invention refers to a transport device for transporting preform elements from a mold to a receiving place.

In the manufacturing of wind turbine rotor blades preform elements are used, which are arranged on a blade mold surface defining the final blade form or the form of the blade part produced in the blade mold. These preform elements are premanufactured and comprise a thermoset or thermoplastic binder matrix, in which reinforcing fiber mats or fiber fabric is embedded. Typically, the binder is activated by heat and melts, thereby embedding the fiber mats or fabric. When cooled back to room temperature, the binder cures and firmly embeds the fiber mats or fabric. Typically, a number of fiber mats or fabric are stacked. These preform elements are manufactured in a preform mold having a mold surface, which, typicality, is convex or concave, thereby defining the overall shape of the preform element, as the cured binder with the embedded reinforcement layers adapts to the form of the mold surface.

When a preform element is produced, it needs to be removed from the mold and transferred to another place, for example a rack having respective receiving means, on which the preform element is arranged when it is stored until it is used for the final production of a blade. For transporting the preform element a transport device is used, comprising a yoke equipped with a number of gripper elements for gripping the preform element. Usually a yoke is used, which has a central yoke element having a C-form, to which yoke element a longitudinal yoke carrier is attached, which yoke carrier comprises the gripper elements. They yoke carrier extends horizontally, the central yoke element is arranged in the middle of the yoke carrier and is connected to a lifting means, so that the whole yoke can be lifted and moved. To avoid any tilting of the yoke when a preform element is grippe and lifted, the center of gravity of the preform element needs to be perfectly aligned to the central yoke element. This is even more important, as they yoke comprises a rotation means, which allows for a rotation of the yoke carrier around a horizontal axis, so that the orientation of the preform element can be changed by rotating the carrier with the preform element around this axis. Usually, the mold surface is concave. When manufacturing the blade, the concave preform element may either be positioned on a blade mold surface area, which is also concave, so that the orientation of the produced preform element does not need to be changed when removed from the preform mold. But when the preform element shall be arranged at a convex blade mold surface area, the orientation of the preform element produced in the concave preform mode needs to be changed, so that the arrangement of the preform element on the blade mold surface is finally simplified. To allow this change of orientation, the yoke is equipped with the respective rotation means. When the center of gravity is not precisely positioned, also during this rotation the arrangement may tilt due to the load shift.

It is an object of the invention to provide an improved transport device for transporting such a preform element.

For addressing this object, the invention proposes a transport device for transporting preform elements from a mold to a receiving place, comprising a yoke equipped with a number of gripper elements for gripping the preform element, which yoke is attached to a lifting device by means of a first and a second rotation unit of the lifting means, which first and second rotation units are coupled to a rotation shaft defining a rotation axis of the yoke, wherein the first rotation unit is coupled to a first end of the rotation shaft provided at a first end of the yoke and the second rotation unit is coupled to a second end of the rotation shaft at a second end of the yoke, wherein at least one drive motor is provided for rotating the yoke around the rotation axis relative to the first and second rotation unit.

The inventive transport device comprises a yoke which is equipped with a number of gripper elements for gripping the preform element. The arrangement of the gripper elements corresponds to the form of the preform elements produced in the preform mold, which is typicality convex, but may also be concave. The yoke is attached to a lifting device. According to the invention, this attachment is realized by means of a first and a second rotation unit of the lifting means, which first and second rotation units are coupled to a rotation shaft defining a rotation axis of the yoke. Both rotation units are coupled to the rotation shaft at a first end of the yoke and a second end of the yoke. These rotation units rotatable bear the rotation shaft at both ends of the yoke, so that the coupling of the yoke to the lifting means is realized at both yoke ends, but not, as in the prior art, in the middle of the yoke. At least one drive motor is provided for rotating the yoke around the rotation axis realized by the rotation shaft relative to the first and second rotation unit. The inventive transport device also provides a rotation possibility of the yoke relative to the lifting device, but the bearings are realized by the rotation units coupled to both yoke ends.

The bearing of the yoke at both ends in the rotation units of the lifting device, which are connected to respective lifting ropes or cables of the lifting device, advantageously avoids any tilting of the yoke, independent of where the center of gravity of the preform element is positioned relative to the yoke. Therefore, the transport device no longer needs to be precisely positioned relative to the preform element to be gripped and transported, as the center of gravity no longer needs to be precisely matched with the center of the yoke. This simplifies the gripping and transferring operation of the preform element, but also simplifies the change of the orientation of the yoke by rotating it around the horizontal axis provided by the rotation shaft, as also during this operation note tilting may occur.

Preferably, the yoke is detachably attached to the lifting device by means of the first and the second rotation units, wherein preferably the first and second rotation units are detachably coupled to the rotation shaft or the shaft is detachably coupled to the yoke. The detachable mounting of the yoke to the lifting device provides the possibility to change the yoke in a simple operation, as it is only necessary to detach both rotation units of the lifting device from the ends of the yoke and to attach them to another yoke, which may either be shorter or longer than the previous yoke, or which may have a gripper arrangement having a different orientation or the like. In an alternative to the detachment of the rotation units from the shaft of the yoke, also the shaft can be detached from the yoke. So, also the adaption of the transport device to a changing transport situation is simplified.

According to the invention the at least one drive motor is preferably arranged at the first or the second rotation unit. The drive motor is therefore part of the lifting device and is coupled or decoupled with the yoke, when the lifting device is attached or detached from the yoke. In an alternative the drive motor can be arranged at the yoke itself.

In one embodiment of the invention, only one drive motor is sufficient for rotating the yoke relative to the lifting device respectively the rotation units. But in other embodiment a second drive motor may be provided, wherein the first drive motor is arranged at the first rotation unit in the second drive motor is arranged at the second rotation unit. In this embodiment the rotation is realized by two synchronized drive motors, which both interact with the rotation shaft for rotating the yoke. This allows for using two smaller drive motor, as each of them may have a lower performance compared to only one drive motor.

Preferably the or each drive motor comprises a receptacle into which the respective end of the rotation shaft engages. The yoke is provided with the rotation shaft, which may also be realized by means of two shaft elements attached to the ends of a central carrier beam of the yoke carrier. The end of the rotation shaft engages into a respective receptacle of the drive motor or the drive motors, where the mechanical coupling is realized. The term "drive motor" comprises an electric motor, a hydraulic drive as well as other appropriate drive means, and a gearbox coupled to and driven by the drive motor, which gearbox comprises the receptacle, where a gear is finally mechanically coupled to the rotation shaft. For the mechanical coupling of the drive motor and the shaft the rotation shaft may comprise at least one toothing meshing with a gear of the drive motor. The rotation shaft preferably comprises a longitudinal outer toothing, with which toothing the gear of the drive motor meshes.

The rotation shaft may be directly realized by means of a carrier at beam of the yoke respectively the yoke carrier, which carrier beam extends along the length of the yoke. According to an alternative embodiment, they shaft may comprise a first and, optionally, especially when a second drive motor is provided, a second shaft element, wherein the or each element detachable engages into a receptacle provided at the first and, optionally, the second end of the yoke. The or these shaft elements, at least one of which is provided with a toothing or the like, may be separately arranged at the yoke, so that the setup of the yoke can be simplified and only the shaft element or elements are specifically adapted for journaling or bearing the yoke to the rotation units respectively for the mechanical coupling to the drive motor. When only one drive motor is provided, at the second end the yoke carrier may be provided directly with an engaging pivot which engages into the receptacle of the rotation unit, so that ant this end no separate shaft element is provided.

As mentioned, the yoke is provided with a number of gripper elements adapted to mechanically grip the preform element. These gripper elements are preferably vacuumed grippers, wherein a vacuum pump for providing a vacuum to the connected vacuum grippers is provided. This vacuum pump is connected to the vacuum grippers by means of one or more hoses, so that a vacuum can be provided at these grippers for sucking the preform element. This vacuum pump is preferably arranged at the second rotation unit, while the one drive motor is arranged at the first rotation unit. In this embodiment, only one drive motor is provided, as the second rotation unit is equipped with the vacuum pump. So, all necessary operational devices, i.e. the drive motor and the vacuum pump, are arranged at the rotation units respectively the lifting device and can therefore coupled to the and decoupled from the yoke. They are therefore a permanent part of the lifting device, so that the setup of the yoke is even more simplified. It is only necessary to coupled both the drive motor and that vacuum pump, which is easily done when the rotation units are connected to the rotation shaft. The mechanical coupling of the drive motor to the rotation shaft is automatically realized, for coupling of the vacuum pump it is only necessary to connect the respective vacuum hoses. In an alternative, the vacuum pump, as well as the drive motor, can be arranged at the yoke itself.

As mentioned, the preform element is transported from the preform mold to another place. Preferably, the preform element is transported to a rack having receiving elements for receiving the preform elements delivered by the lifting device. The transport device comprises such a rack having a number of receiving elements, the form or shape of which is adapted to the form or shape of the preform element, so that the preform element is received in a kind of form-fit reception. The receiving elements are preferably bar-like elements extending from a rack carrier, so that the preform element can be placed on these elements from above. The rack may comprise a number of receiving elements arranged at different heights, which receiving elements may be moved from a non-operational position to an operational position and the rack may receive a number of preform elements stacked above each other.

Preferably, as already mentioned, the gripper elements are arranged in a convex or concave arrangement for gripping a convex or concave preform element, wherein the receiving elements have a convex or concave form.

According to another embodiment of the invention, the transport device may comprise two service racks each comprising a receptacle for receiving and end of the rotation shaft of the yoke. As mentioned, the yoke is detachable from the lifting device by detaching the rotation units from the yoke ends. For maintenance purpose, the yoke may be arranged on the service racks, to which it is transported while attached to the lifting device. The lifting device transports and lowers it onto the service racks, so that the rotation shaft ends are received in respective receptacles of the service racks. After the rotation units are detached from the rotation shaft, any maintenance works may be performed at the yoke or the gripper elements etc. Preferably, the shaft ends are rotatable received in the receptacles, so that the orientation of the yoke may be changed. Preferably, the yoke is rotatable around at least 180°, so that it may be changed in its spatial position when maintenance.

Other objects and features of the present invention will become apparent from the following detailed description considered in conjunction with the accompanying drawings. The drawings, however, are only principle sketches designed solely for the purpose of illustration and do not limit the invention. The drawings show:
- fig. 1: a principal illustration of the inventive transport device,
- fig. 2: a partial view of the yoke and the lifting device with the rotation unit detached from the yoke,
- fig. 3: a partial view of the yoke with the shaft element detached from the yoke
- fig. 4-9: various illustrations showing the transport of a preform element to the rack,
- fig. 10-15: various illustrations showing the transfer of the yoke to the service racks, and
- fig. 16: an illustration showing the lifting device connected to two different yokes.

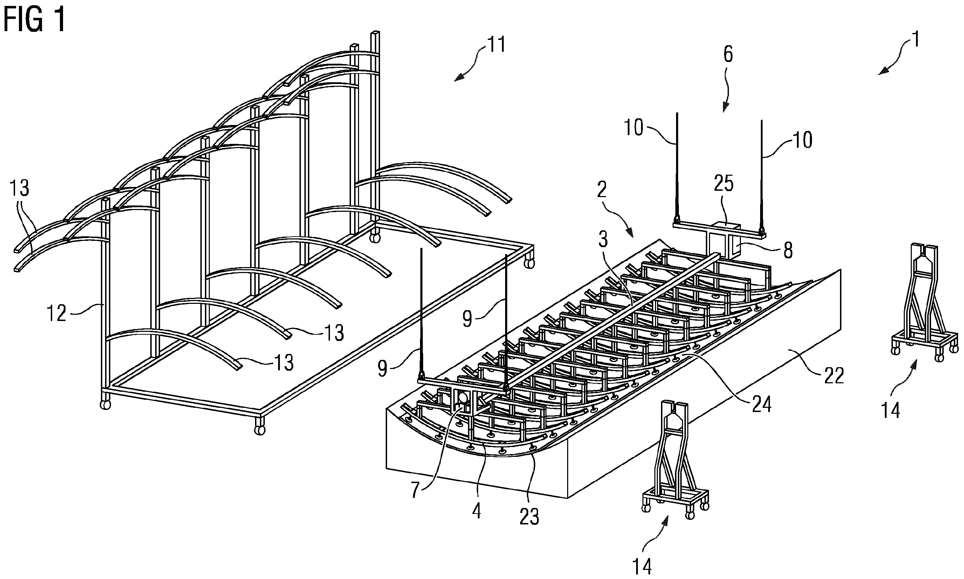

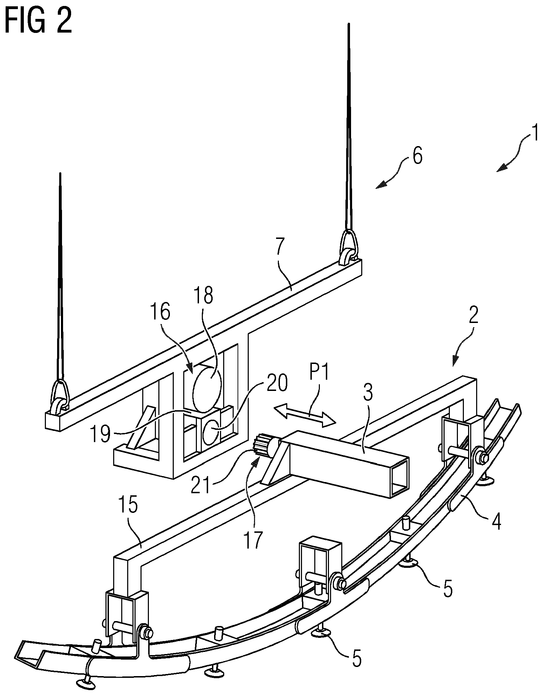

Fig. 1 shows the inventive transport device 1 with all its parts. The transport device comprises a yoke 2 comprising a longitudinal yoke carrier 3, to which a number of gripper carrier elements 4 having a bent, concave shape is attached. To each of these gripper carrier elements 4 a number of gripper elements 5, see fig. 2, which are preferably vacuum gripper elements, are attached. These gripper elements are adjustable in their position along the length of the gripper carrier element 4 and also in their height. As fig. 1 shows, a number of these gripper carrier elements 4 and therefore a number of gripper elements 5 are arranged along the yoke carrier 3.

The yoke 2 is connected to a lifting device 6, which comprises a first rotation unit 7 and a second rotation unit 8, each of which is connected to lifting ropes or cables 9, 10, which are connected to respective hoists (not shown) for lifting and lowering the yoke to. The yoke carrier 3 is equipped with shaft elements, which are explained later, which shaft elements, in combination with the yoke carrier 3, realize a rotation axis. This rotation axis respectively the rotation shaft is rotatable received in respective receptacles of the first and second rotation units 7, 8, so that the yoke 2 can rotate around this rotation axis, as explained later.

The transport device further comprises a rack 11, comprising a rack carrier 12, to which a number of receiving elements 13 is attached. These receiving elements 13 are bar-like and have a shape that corresponds to the shape of the gripper carrier elements 4. The receiving elements 13 can be moved from a non-operational position to an operational position, in which they are ready to receive a preform element delivered by the yoke 2. As shown, the receiving elements 13 are arranged in different heights, so that the rack 11 is adapted to receive a number of preform elements at different levels.

Finally, the transport device 1 comprises two service racks 14, adapted to receive the yoke 2 for maintenance purpose.

Fig. 2 shows an enlarged partial view of the transport device 1, with a part of the yoke 2 respectively the yoke carrier 3 and the first end of the yoke 2. The illustration shows the gripper elements carrier 4 with the gripper elements 5 attached to a receiving member 15 of the yoke carrier 3. Fig. 2 further shows a part of the lifting device 6 with the first rotation unit 7, which comprises a drive motor 16, which is detachable connectable to a rotation shaft 17 of the yoke 2, as shown by the arrow P1. The drive motor 16 comprises an electric motor 18 and a gearbox 19 having a receptacle 20, into which the shaft 17 engages. The shaft 17 comprises an outer toothing 21, which engages in the receptacle 20, and which is coupled to a gear of the motor driven gearbox 19. The mechanical connection between the rotation units 7 and the yoke 2 respectively the drive motor 16 and the rotation shaft 17 is simple, as it is only necessary to insert the rotation shaft 17 into the receptacle 20 realizing the mechanical drive connection. Certainly, this connection is fixated by respective fixation means in order to avoid any unwanted decoupling of the rotation unit 7 from the yoke 2. They second rotation unit 8 also comprises a receptacle, into which the rotation shaft 17 at the other end of the yoke engages and is rotatable received in this receptacle. This end of the shaft 17 is not toothed, as it is only rotatable received for providing a rotation bearing. The connection nevertheless is realized in the same way as explained to the connection of the first rotation units 7. It is only necessary to insert the end of the rotation shaft 17 into the respective receptacle provided at the second rotation unit, realizing the rotation bearing, which connection is certainly also fixated by respective fixation means for avoiding any unwanted decoupling.

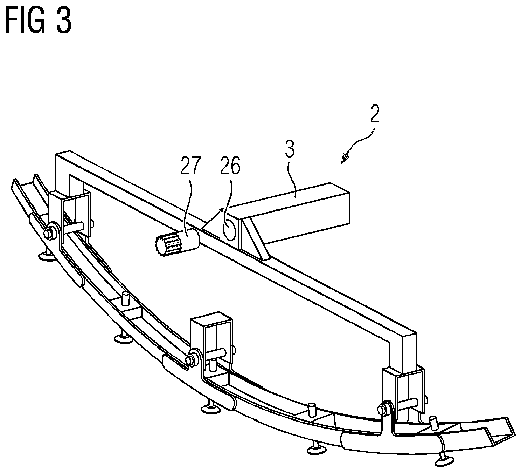

Fig. 3 shows a perspective illustration of a part of the yoke 2 with the yoke carrier 3. The yoke carrier 3 is provided with a receptacle 26, into which a shaft element 27 engages and is fixated and secured against rotation. The other second end of the yoke 2 respectively the yoke carrier 3 is also provided with such a receptacle and a second shaft element, wherein at this second end, where no toothing is provided, also a simple cylindrical end of the yoke carrier 3, which acts as a pin or pivot, is sufficient.

As fig. 1 shows, the yoke 2 is connected in rotatable bearings to the rotation units 7, 8 at both opposing ends of the yoke 2.

In operation, see fig. 1, the yoke 2 is positioned above a preform mold 22 having a concave mold surface 23, on which a preform element 24 is built by arranging a layer stack of fiber mats or fiber fabric, which is embedded in a polymer binder matrix. The preform element 24 adapts to the shape of the concave mold surface 23, wherein the shape of the gripper element carriers 4 and the arrangement of the gripper elements 5 also corresponds to this concave form. As mentioned, the gripper elements 5 are vacuum grippers. A vacuum pump 25 is arranged at the second rotation unit 8 and is therefore, just like the drive motor 16, part of the lifting device 6, but not of the yoke 2. The vacuum pump 25 is connected to one or several hoses, which are connected to the vacuum gripper elements 5, so that a vacuum can be drawn, and the gripper elements 5 can suck to the surface of the preform element 24 for firmly fixating the preform element.

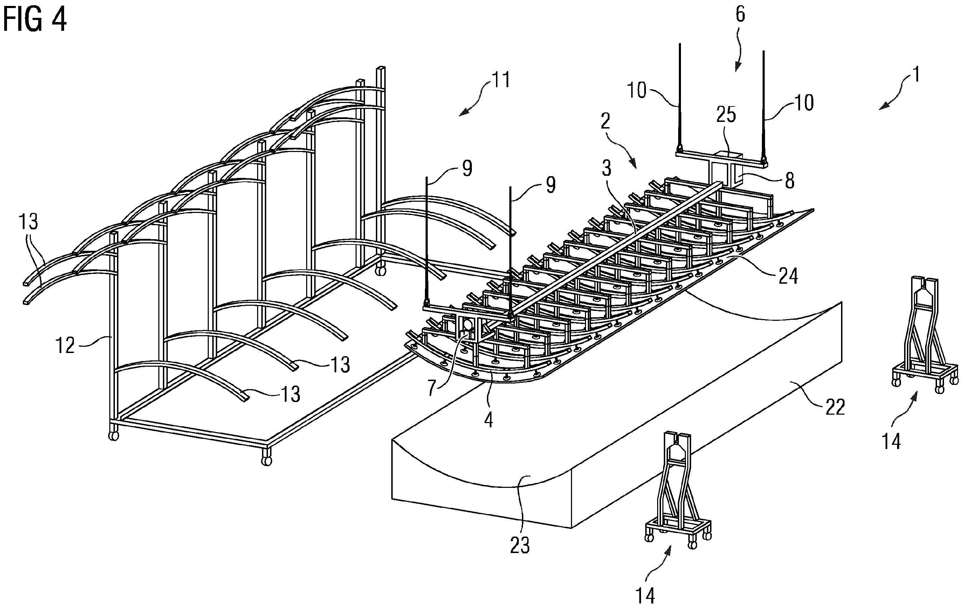

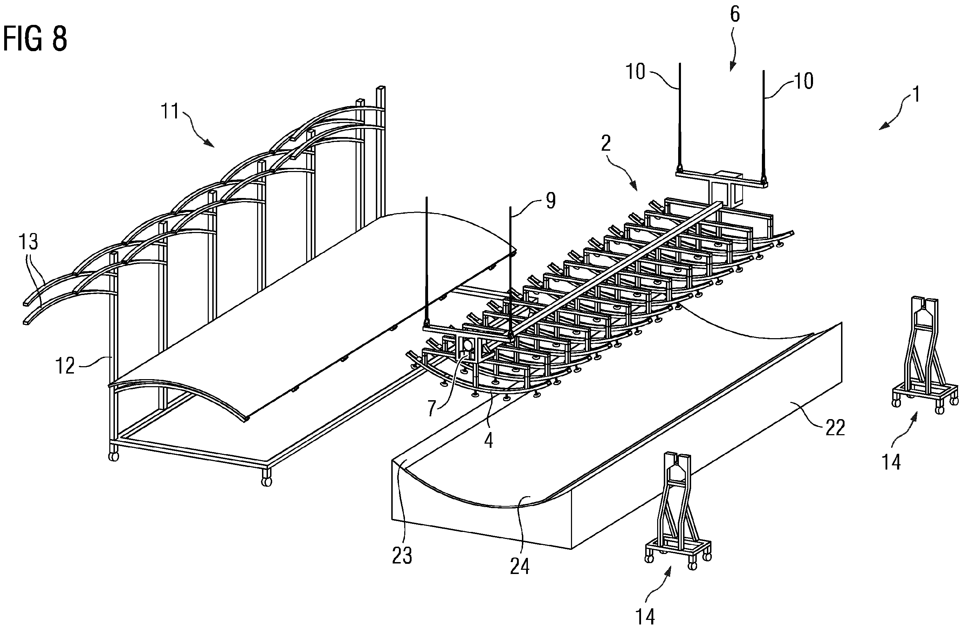

The figs. 4 to 9 show the operation of the transport device 1, with the situation shown in fig. 1 as the starting point. The gripper elements 5 have gripped the preform element 24, as explained to fig. 1. This preform element 24 shall be transported to the rack 11. The lifting device 6 lifts the rotation units 7, 8 and with them the yoke 2, which, as mentioned, is connected via the carrier 3 and the rotation shaft 17 to both rotation units 7, 8. As the yoke 2 is connected at both ends to the lifting device 6 respectively both rotation units 7, 8, no tilting occurs when they yoke 2 is lifted, as long as the center of gravity of the preform element is within the area defined by the lifting points. The connection at both ends prohibits any kind of tilting.

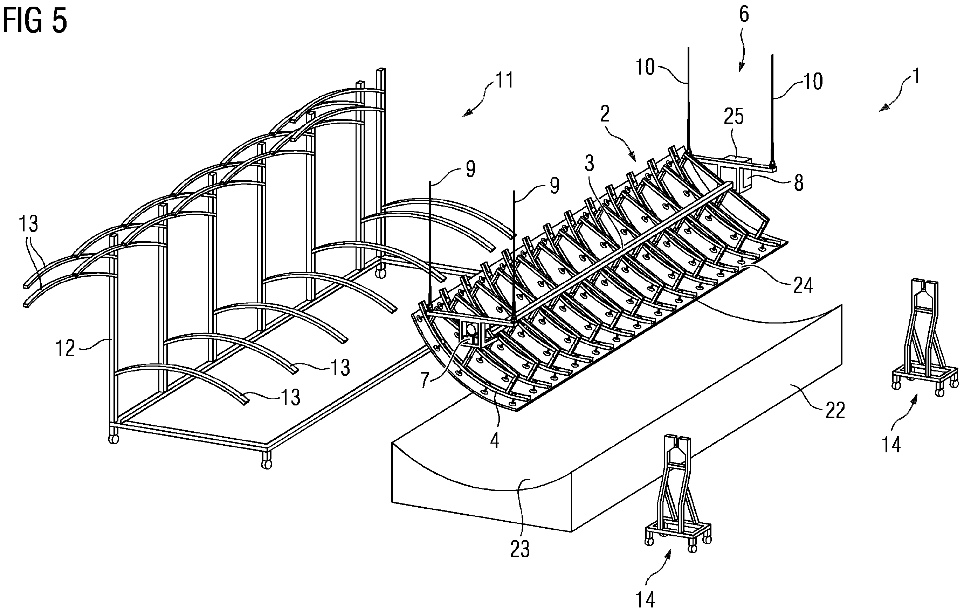

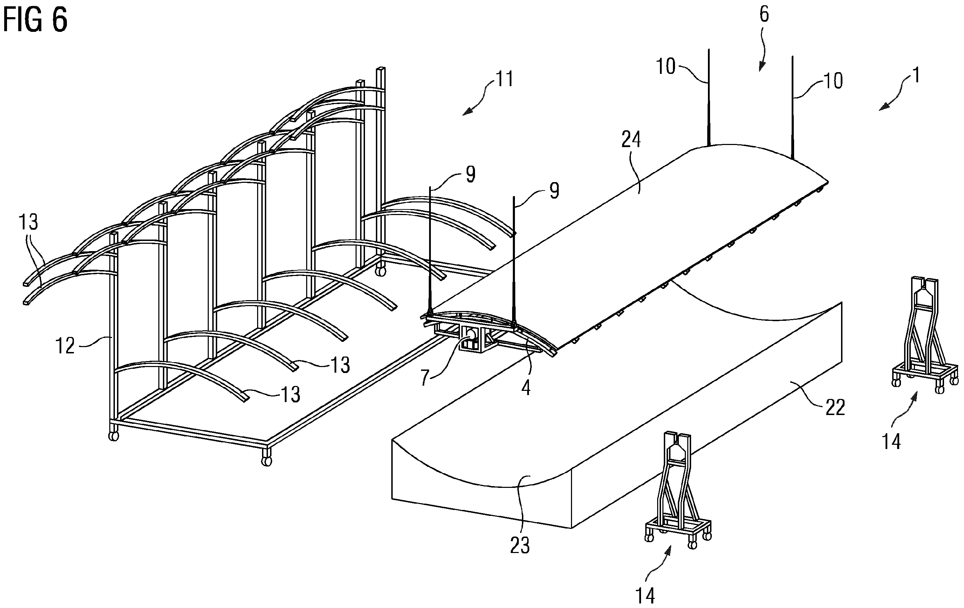

When the yoke 2 is sufficiently lifted, it is rotated, as shown in fig. 5 and 6, by means of the drive motor 16 coupled to the rotation shaft 17. At the end of this rotation of the yoke 2 around the horizontal axis, the yoke 2 has turned upside down for 180°, so that the preform element 24, which was at the beginning of the operation at the bottom, is now on top, see fig. 6. Due to the connection of the yoke 2 at both ends to the lifting device, no tilting occurs also during this rotating motion.

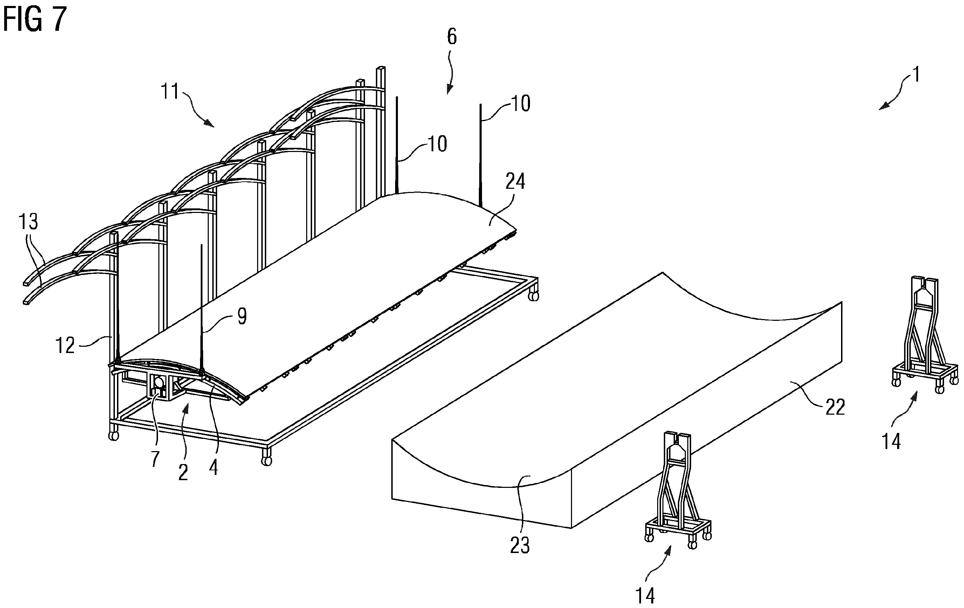

Now the lifting device 6 moves horizontally over the rack 11 and, when reaching this final horizontal position, lowers the yoke 2, so that the gripper element carriers 4 engage between the receiving elements 13 and the preform element 24 rests on the receiving elements 13, as shown in fig. 7.

Next, the they vacuum gripper elements 5 are detached from the preform element 24 by stopping the vacuum pump 25, whereafter the lifting device 6 lowers the yoke 2 a little bit, so that it is distanced from the preform element 24 and the receiving elements 13 and can be moved horizontally by a reverse movement of the lifting device 6. When the yoke 2 is again in a secure position, the drive motor 16 rotates the empty yoke 2 back to the original position, in which it is transferred back over the preform mold 22, on which another preform element 24 was built, which is, in the next cycle, gripped and moved to the rack 11, as explained previously.

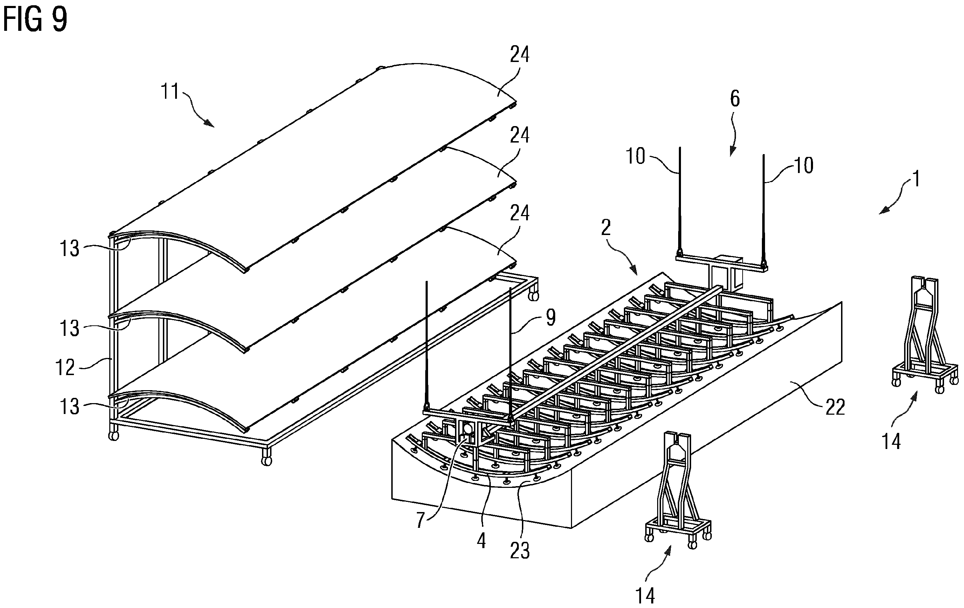

As fig. 9 shows, the rack 11 is adapted to receive three separate preform elements 24 on the respective receiving elements 13, which are arranged in different height levels and are sufficiently distanced from another, so that the empty yoke 2 can easily be moved out of the rack 11 by a horizontal movement of the lifting device 6.

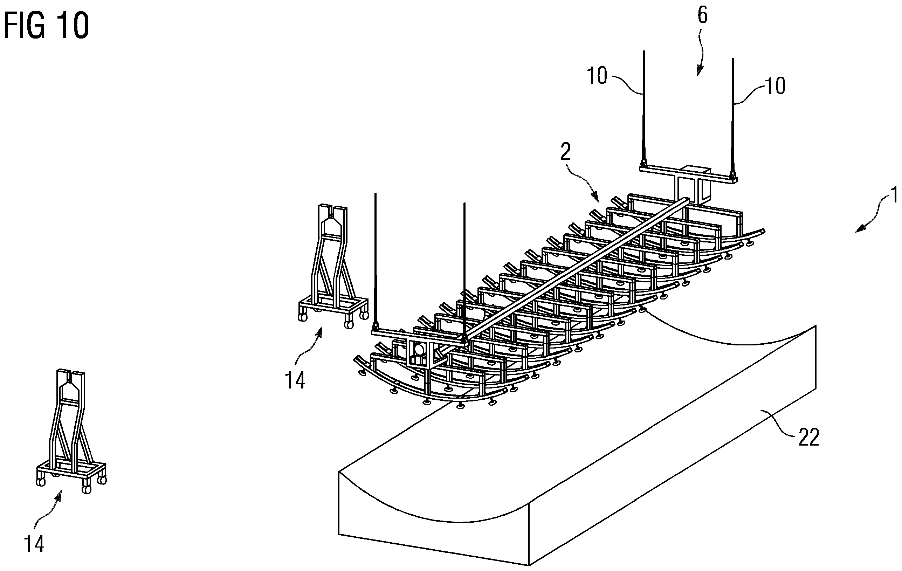

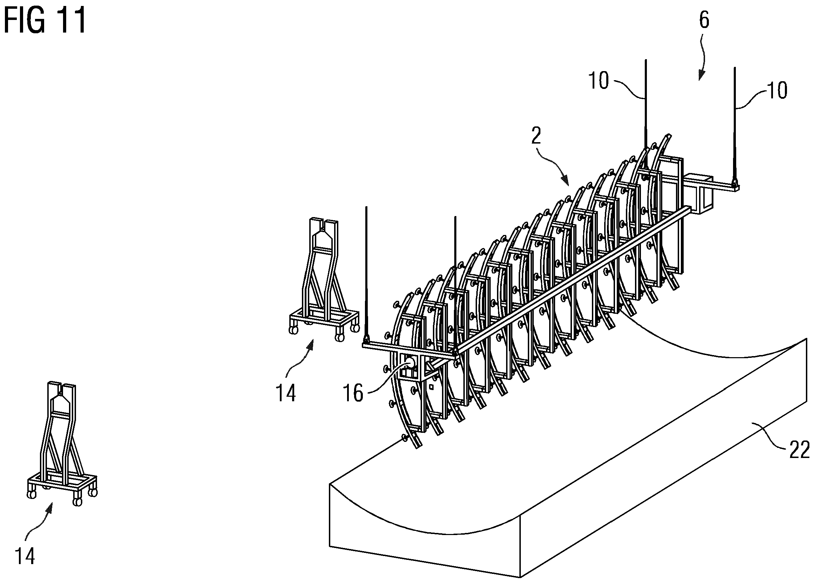

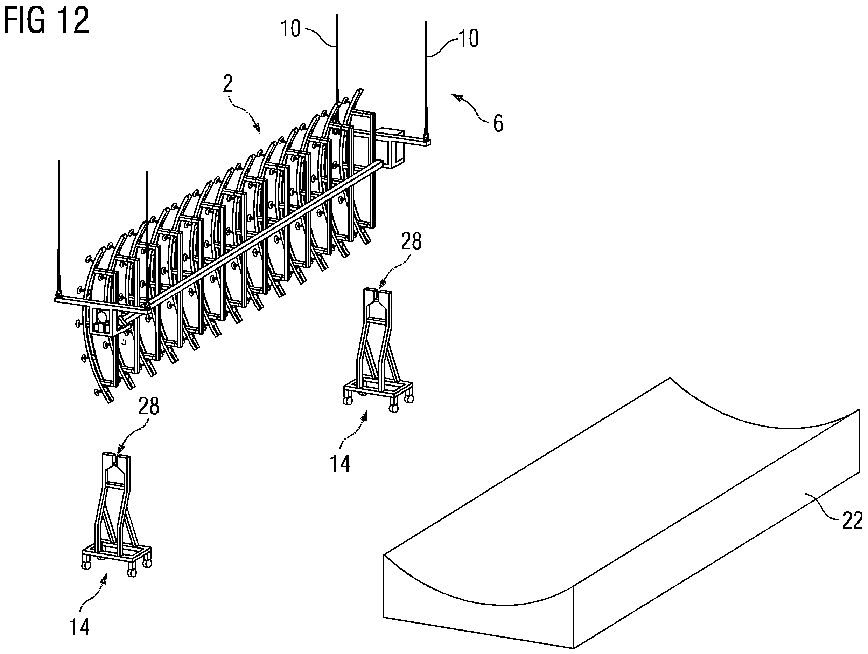

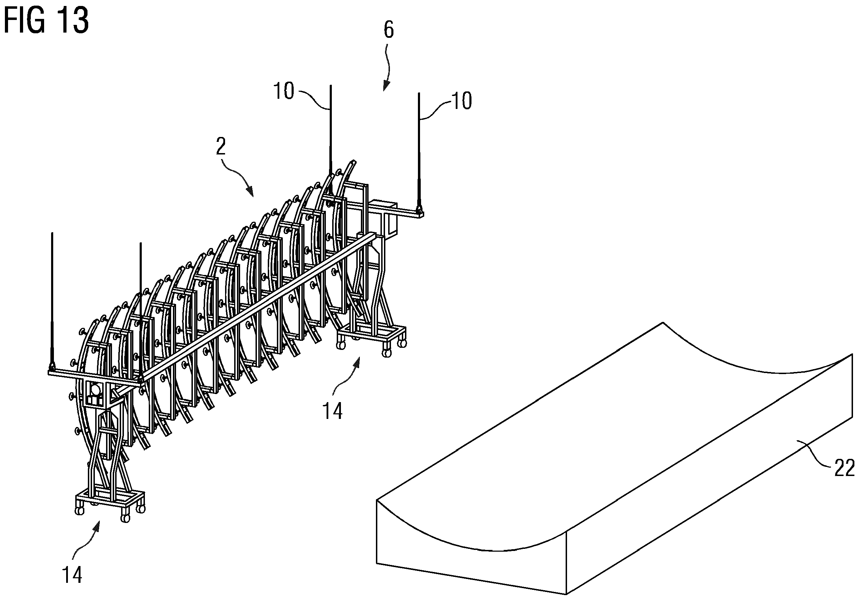

Figs 10 to 15 show the possibility of a maintenance operation of the yoke 2. The empty yoke 2 is lifted, see fig. 10, by the lifting device 6, whereafter it is rotated by the drive rotor 16 around the horizontal axis provided by the rotation shaft. This rotation is for approximately 90°, as shown in fig. 11. With this orientation of the yoke 2 the yoke 2 is transported horizontally over both service racks 14. Both service racks 14 are provided with receptacles 28 adapted to receive the rotation shaft ends respectively the shaft elements 17 arranged at both ends of the yoke 2.

When the yoke 2 is aligned with the service racks 14 respectively the receptacles 28, the yoke 2 is lowered by the lifting device 6, so that the ends of the rotation shaft respectively the shaft elements 17 engage into the receptacles 28, where they are rotatable received.

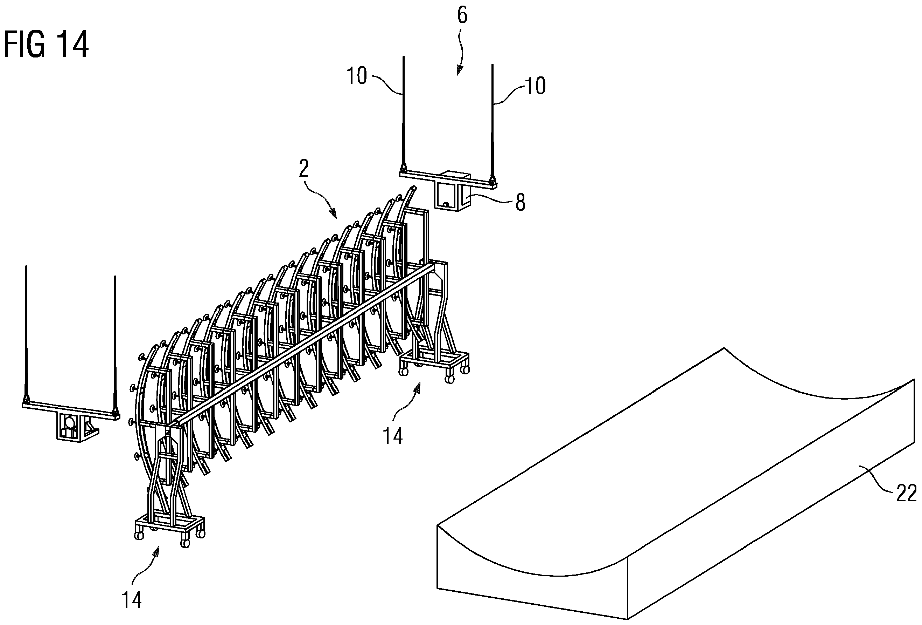

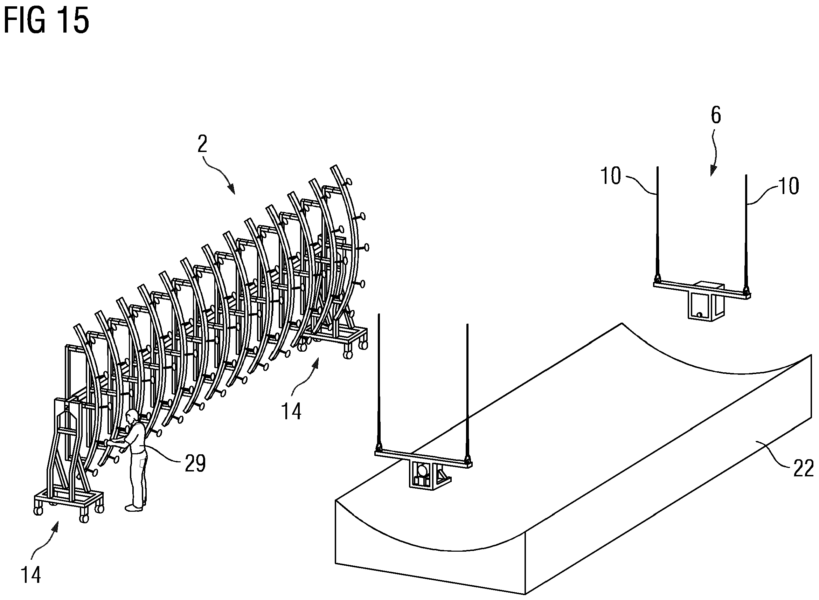

Afterwards both the first and the second rotation unit 7, 8 are detached from the ends of the yoke 2, see fig. 14, so that the lifting device 6 may be removed back to the preform mold 22, as shown in fig. 15.

The yoke 2, as mentioned, is received at the service racks 14. A maintenance worker 29 can now perform maintenance work at the yoke 2 respectively the gripper elements 5, as for example shown in fig. 15. Due to the rotatable bearing of the yoke 2 in the receptacles 28, it is possible to change the spatial orientation of the yoke 2. It can be swivelled from the 90° positioning shown in fig. 14 to a horizontal position at 0° and to the other 90° positioning shown in fig. 15. This swivelling operation can be done manually, wherein the yoke 2 is fixated in the respective maintenance position.

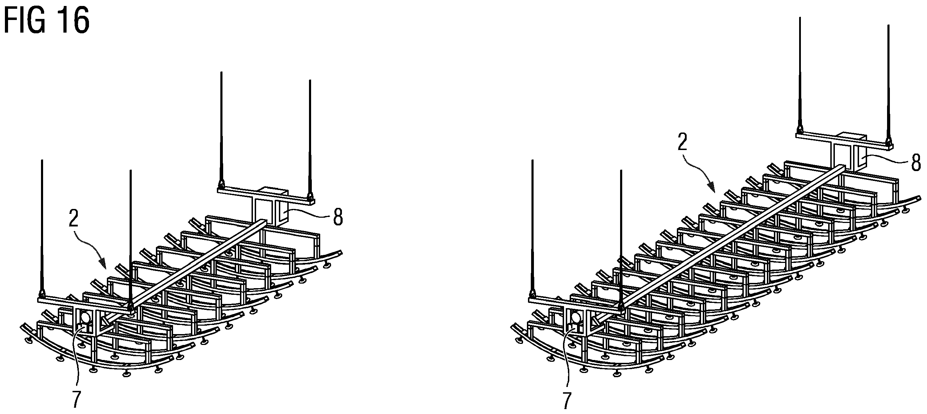

Finally, fig. 16 shows and other benefit of the inventive transport device 1. As explained, both the first and second rotation unit 7, 8 are detectably attached to the respective yoke 2. The connection is simply mounted respectively detached, so that it is possible to quickly connect the lifting device 6 respectively the rotation units 7, 8 to another yoke 2. Fig. 16 shows two embodiments, wherein in the embodiment shown to the left a first short yoke 2 to is connected to the rotation units 7, 8, while in the embodiment shown to the right a second longer yoke 2 is connected to the rotation units 7, 8. This illustration shall only show the changeability of the inventive transport device respectively the transport system. While fig. 16 shows two yokes 2 having different length, it is certainly also possible to change from a first yoke 2 having a convex arrangement of the gripper elements 5 to a second yoke 2 having a concave arrangement of the gripper elements 5.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Transport device for transporting preform elements (24) from a mold (22) to a receiving place, comprising a yoke (2) equipped with a number of gripper elements (5) for gripping the preform element (24), which yoke (2) is attached to a lifting device (6) by means of a first and a second rotation unit (7, 8) of the lifting means (6), which first and second rotation units (7, 8) are coupled to a rotation shaft defining a rotation axis of the yoke (2), wherein the first rotation unit (7) is coupled to a first end of the rotation shaft provided at a first end of the yoke (2) and the second rotation unit (8) is coupled to a second end of the rotation shaft at a second end of the yoke (2), wherein at least one drive motor (16) is provided for rotating the yoke (2) around the rotation axis relative to the first and second rotation unit (7, 8).

2. Transport device according to claim 1, **characterized in that** the yoke (2) is detachably attached to the lifting device (6) by means of the first and the second rotation units (7, 8), and/or that the first and second rotation units (7, 8) are detachably coupled to the rotation shaft.

3. Transport device according to claim 1 or 2, **characterized in that** the at least one drive motor (16) is arranged at the first or the second rotation unit (7, 8).

4. Transport device according to claim 3, **characterized in that** a second drive motor (16) is provided, wherein the first drive motor (16) is arranged at the first rotation unit (7) and the second drive motor (16) is arranged at the second rotation unit (8).

5. Transport device according to claim 2 to 4, **characterized in that** the or each drive motor (16) comprises a receptacle (20) into which the respective end of the rotation shaft engages.

6. Transport device according to one of the preceding claims, **characterized in that** the rotation shaft comprises at least one toothing (21) meshing with a gear of the drive motor (16).

7. Transport device according to claim 5 and 6, **characterized in that** the end of the shaft engaging in the receptacle (20) is provided with the toothing (21).

8. Transport device according to one of the preceding claims, **characterized in that** the shaft comprises a first and a second shaft element (17), wherein each element (17) detachable engages into a receptacle (260) provided at the first and the second end of the yoke (2).

9. Transport device according to one of the preceding claims, **characterized in that** the yoke (2) is rotatable around 360°.

10. Transport device according to one of the preceding claims, **characterized in that** the gripper elements (5) are vacuum grippers, and that a vacuum pump (25) for providing a vacuum to the connected vacuum grippers is provided.

11. Transport device according to claim 10, except for claim 4, **characterized in that** the vacuum pump (25) is arranged at the second rotation unit (8) and the drive motor (16) is arranged at the first rotation unit (7).

12. Transport device according to one of the preceding claims, **characterized in that** it comprises a rack (11) having receiving elements (13) for receiving a preform element (24) delivered by the lifting device (6).

13. Transport device according to claim 12, **characterized in that** the gripper elements (5) are arranged in a convex or concave arrangement for gripping a convex or concave preform element (24), wherein the receiving elements (13) have a convex or concave form.

14. Transport device according to one of the preceding claims, **characterized in that** it comprises two service racks (14) each comprising a receptacle (28) for receiving an end of the rotation shaft of the yoke (2).

15. Transport device according to claim 14, **characterized in that** the shaft ends are rotatably received in the receptacles (28), wherein preferably the yoke (2) is rotatably around at least 180°.
